# EUROPÄISCHE PATENTSCHRIFT

(11) **EP 2 012 984 B1**
(45) Veröffentlichungstag und Bekanntmachung des Hinweises auf die Patenterteilung: **10.08.2016**
(21) Anmeldenummer: 07724513.2
(22) Anmeldetag: 24.04.2007
(51) Int. Cl.: B27B 5/30

(54) **ANTRIEBSEINHEIT MIT EINEM ROTIERENDEN SÄGEBLATT ZUM ANSCHLUSS AN EINEN ROBOTER**
DRIVE UNIT WITH A ROTATING SAW BLADE FOR CONNECTION TO A ROBOT
UNITÉ D'ENTRAÎNEMENT POURVUE D'UNE LAME DE SCIE ROTATIVE DESTINÉE À ÊTRE RACCORDÉE À UN ROBOT

(30) Priorität: 28.04.2006 DE 202006007224 U
(43) Veröffentlichungstag der Anmeldung: 14.01.2009
(73) Patentinhaber: Schmid & Wezel GmbH & Co. KG, 75433 Maulbronn (DE)
(72) Erfinder: MAMMEL, Erich, 75417 Mühlacker-Lienzingen (DE)
(74) Vertreter: DREISS Patentanwälte PartG mbB
(86) Internationale Anmeldenummer: PCT/EP2007/003583
(87) Internationale Veröffentlichungsnummer: WO 2007/124893

(56) Entgegenhaltungen:
- DE-B3-102004 022 346
- US-A- 2 842 908
- US-A- 2 981 300
- US-A- 4 576 073

## Beschreibung

Die Erfindung betrifft eine Antriebseinheit gemäß dem Oberbegriff des Anspruchs 1. Eine solche Antriebseinheit ist der DE 10 2004 022 346 B3 zu entnehmen.

Die der Erfindung zu Grunde liegende Aufgabe besteht darin, eine Antriebseinheit dieser Art zu schaffen, bei der das Sägeblatt einfach auswechselbar ist. Bei einer Einrichtung zum Wechsel des Sägeblatts gemäß der US 4,909,813 A ist die erforderliche Präzision der Einspannung nicht gegeben. Die entlang des Umfangs vorgesehenen Spanneinrichtungen sind zu umständlich, bringen ein zu großes Gewicht mit sich und führen bei hohen Drehzahlen, sofern auch nur kleinste Ungenauigkeiten vorhanden sind, zu einer Unwucht der sich drehenden Einheit und damit zu Schwingungen, die die Arbeitsweise beeinträchtigen.

Die oben genannte Aufgabe wird mit den Merkmalen des Anspruchs 1 gelöst. Vorteilhafte Weiterbildungen der Erfindung sind den abhängigen Ansprüchen zu entnehmen.

Die leichte Auswechselbarkeit der gesamten Einheit ermöglicht insbesondere ein sehr schnelles Auswechseln zur Inspektion, zur Reinigung und zum Nachschleifen des Sägeblatts. Die Unterbrechung der Arbeit des Roboters ist nur kurz. Das Abnehmen und Auswechseln des Sägeblatts mit Schutzhaube verhindert auch die Gefahr von Verletzungen der Person, die diese Tätigkeit erledigt. Es bringt erhebliche Handhabungsvorteile mit sich, das Sägeblatt selbst nicht direkt am Roboter wechseln zu müssen.

Ein Ausführungsbeispiel der Erfindung wird im Folgenden unter Bezugnahme auf die beigefügten Zeichnungen beschrieben. Es stellen dar:
- Figur 1: ein Ausführungsbeispiel;
- Figur 2: ein Schnitt in Richtung der Pfeile II-II in Figur 1;

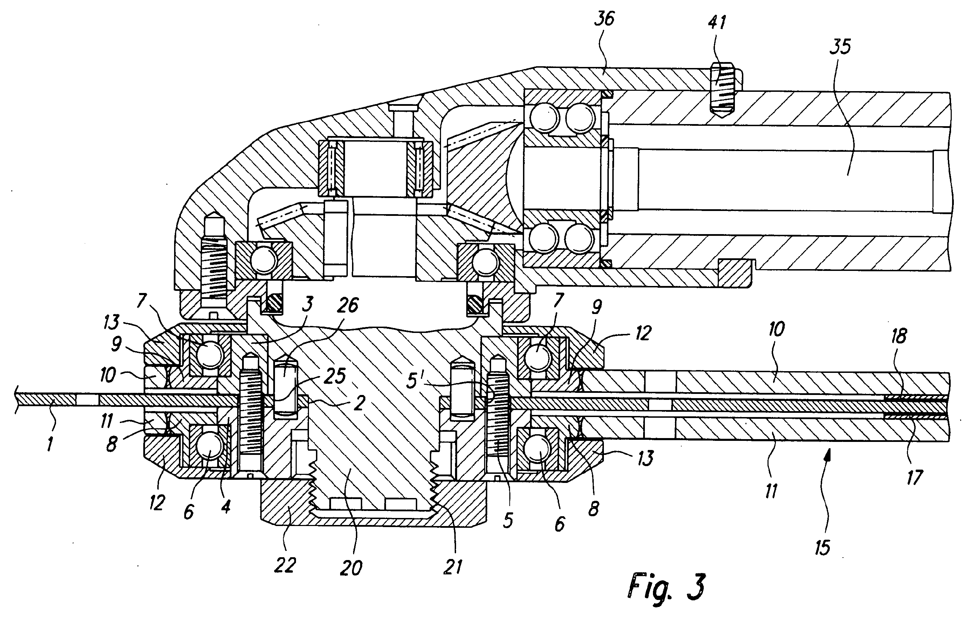

- Figur 3: eine vergrößerte Darstellung des linken Bereichs von Figur 2.

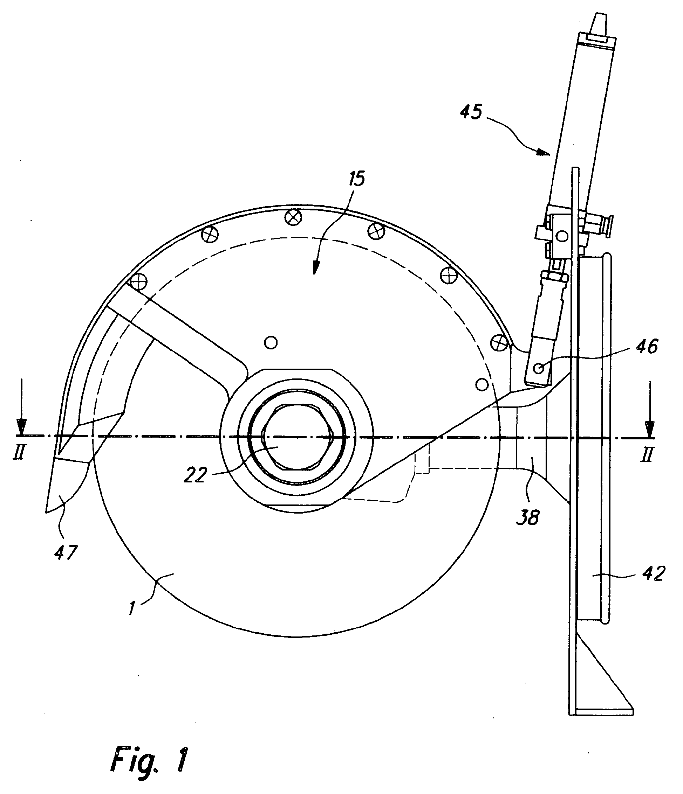

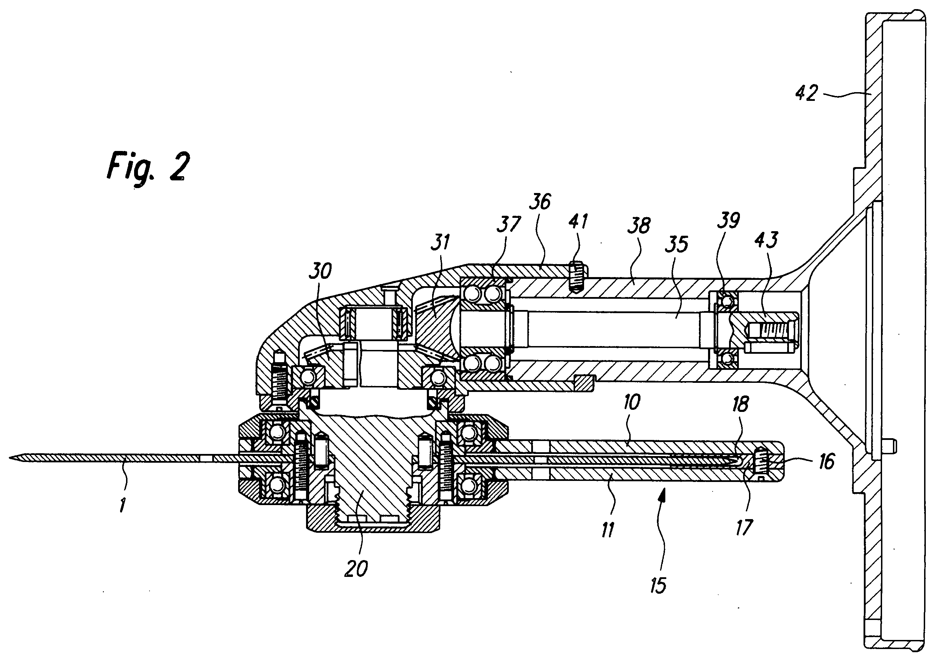

Figur 1 zeigt die gesamte Vorrichtung mit einem Sägeblatt 1. Wie aus Figur 2 zu ersehen, weist das Sägeblatt 1 eine runde Öffnung 2 auf. Das Sägeblatt 1 ist entlang des Umfangs der Öffnung 2 zwischen zwei inneren Ringen 3 und 4 eingespannt, die beidseitig des Sägeblatts 1 angeordnet sind. Die Ringe 3 und 4 sind durch drei entlang des Umfangs angeordnete Schrauben 5 (von denen nur zwei ersichtlich sind) miteinander und mit dem Sägeblatt 1 verschraubt. Die Schrauben 5 erstrecken sich durch Öffnungen 5' im Sägeblatt 1. Der innere Durchmesser der Ringe 3 und 4 ist gleich dem der Öffnung 2 des Sägeblatts 1. Auf den Ringen 3 und 4 sitzen außen jeweils Kugellager 6 beziehungsweise 7, so dass die durch das Sägeblatt 1 und die inneren Ringe 3, 4 gebildete Einheit in den äußeren Ringen 8, 9 drehbar ist, wobei sich das Sägeblatt 1 mit Abstand durch den Zwischenraum zwischen den äußeren Ringen 8 und 9 hindurch erstreckt. Mit den äußeren Ringen 8, 9 sind Seitenplatten 10, 11 einer Schutzhaube 15 fest verbunden (zum Beispiel verschweißt). Die Schutzhaube 15 mit der durch das Sägeblatt 1 und die inneren Ringe 3, 4 gebildeten Einheit dreht sich also mit dem Sägeblatt 1 nicht mit, wenn letzteres angetrieben wird. Die Kugellager 6, 7 sind beidseitig durch Abdeckplatten 12, 13 abgedeckt. Die beiden Seitenplatten 10, 11 der Schutzhaube 15 sind entlang eines Teils ihres Umfangs außen miteinander durch Schrauben 16 verschraubt. Der Abstand zwischen den Seitenplatten 10, 11 wird durch einen Halbring 17 gewährleistet, der sich in der ersichtlichen Weise ein Stück einwärts erstreckt und mit einem Schlitz 18 versehen ist, in der sich der äußere Umfang des Sägeblatts 1 hinein erstreckt. Das Sägeblatt 1 darf die Innenflächen des Schlitzes 18 nicht streifen, darf aber gleichwohl von diesen nur einen geringen Abstand haben, damit keine Knochensplitter in die Schutzhaube 15 eingezogen werden.

Die Einheit, die durch das Sägeblatt 1, die inneren Ringe 3, 4, die äußeren Ringe 8, 9, die Abdeckplatten 12, 13 und die Seitenplatten 10, 11 der Schutzhaube 15 gebildet wird, sitzt auf der Antriebsnabe 20, deren äußeres Ende mit einem Gewinde 21 versehen ist. Diese Einheit ist auf der Antriebsnabe 20 durch die Mutter 22 verschraubt und kann durch Öffnen dieser Schraubverbindung einfach und schnell ausgewechselt werden. Der exakte Sitz ist dadurch gewährleistet, dass das Sägeblatt 1 entlang seines Umfanges Öffnungen 25 aufweist, in die auf der Antriebsnabe 20 entlang ihres Umfangs verteilte Stifte 26 eingreifen. Bei Drehung der Antriebsnabe 20 drehen sich somit die inneren Ringe 3, 4 und des Sägeblatts 1 mit, während der äußere Teil dieser Einheit, gebildet durch die äußeren Ringe 8, 9, die Abdeckplatten 12, 13 und die Seitenplatten 10, 11 der Schutzhaube 15 mit Eingreifnase 47, wie in Figur 1 gezeigt, durch eine stationäre Kolben-/Zylinderanordnung 45, die an der Schutzhaube 15 bei 46 angreift, gegenüber einem Schlachttier in verschiedene Positionen gebracht werden kann, so z.B. in eine Stellung von 23° gegenüber der gezeigten 0°-Stellung beim Trennen von Bauch und Brustbein (vergleiche DE 10 2004 022 346) oder in eine Stellung von 90° zur kompletten Freigabe des Sägeblatts 1 beim Einschnitt in das Schlossbein eines geschlachteten Tieres. Beim Auswechseln der oben genannten Einheit muss selbstverständlich auch die Verbindung bei 46 gelöst werden, was aber problemlos einfach möglich ist, da es sich dabei nur um eine Schraube handelt.

Die Antriebsnabe wird über die Ritzel 30 und 31 durch eine Welle 35 angetrieben, die im Gehäuse 36 mittels Lager 37 und im Gehäuse 38 mittels Lager 39 gelagert ist. Die Gehäuse 36, 38 sind durch die Schraube 41 miteinander verbunden. Das Gehäuse 38 geht in den Flansch 42 über, der an das Motorgehäuse anschließt. Beim Aufsetzen dieser Roboteranschlussplatte auf das Motorgehäuse des Roboters gelangt das Ende 43 der Welle 35 in Eingriff mit der Antriebswelle des Motors des Roboters.

## Patentansprüche

1. Antriebseinheit mit einem rotierenden in einer Schutzhaube (15) drehbar angeordneten Sägeblatt (1) zum Anschluss an einen Roboter, gebildet durch ein an den Roboter anschließbares Gehäuse (36, 38, 42), in dem eine Welle (35) gelagert ist, durch die unter Zwischenschaltung eines Getriebes (30, 31) das Sägeblatt (1) antreibbar ist, **dadurch gekennzeichnet, dass** das Sägeblatt (1) zwischen zwei beiderseits an dem Sägeblatt (1) angeordneten und dieses aufnehmenden, sowie miteinander und mit diesem fest verbundenen inneren Ringen (3, 4) gehalten wird, die drehbar in nicht mitdrehenden mit der Schutzhaube verbundenen äußeren Ringen (8, 9) aufgenommen sind, und dass die durch das Sägeblatt (1), die inneren Ringe (3, 4), Abdeckplatten (12, 13), die Schutzhaube (15) und die äußeren Ringe (8, 9) gebildete Einheit auf einer vom Getriebe (30, 31) angetriebenen Antriebsnabe (20) lösbar befestigt ist.

2. Antriebseinheit nach Anspruch 1, **dadurch gekennzeichnet, dass** die mit dem Sägeblatt (1) verbundenen inneren Ringe (3, 4) in den äußeren Ringen (8, 9) mittels Kugellager (6, 7) gelagert sind, die von den Abdeckplatten (12, 13) abgedeckt sind.

3. Antriebseinheit nach Anspruch 1 oder 2, **dadurch gekennzeichnet, dass** die genannte Einheit (1, 3, 4, 8, 9, 12, 13, 15) mit der Antriebsnabe (20) verschraubbar (21, 22) ist.1

4. Antriebseinheit nach einem der Ansprüche 1 bis 3, **dadurch gekennzeichnet, dass** das Ende der Antriebsnabe (20) mit einem Gewinde (21) versehen ist, auf das eine Mutter (22) aufgeschraubt wird.

5. Antriebseinheit nach einem der Ansprüche 1 bis 4, **dadurch gekennzeichnet, dass** die die Säge (1) enthaltende Einheit gegenüber der Antriebsnabe (20) durch den Eingriff von Stiften (26) in Öffnungen (25) formschlüssig aufgenommen ist, wobei eines der Elemente Zapfen/Öffnungen (25, 26) an der Antriebsnabe (20) und das andere an einem der inneren Ringe (3, 4) vorgesehen ist.

6. Antriebseinheit nach einem der Ansprüche 1 bis 5, **dadurch gekennzeichnet, dass** die beiden beidseitig des Sägeblattes (1) einander gegenüberliegend angeordneten inneren Ringe (3, 4) miteinander und mit dem Sägeblatt (1) verschraubt (5) sind, wobei die Schrauben (5) sich durch entsprechende Öffnungen (5') im Sägeblatt (1) hindurch erstrecken.

7. Antriebseinheit nach einem der Ansprüche 1 bis 6, **dadurch gekennzeichnet, dass** der äußere Umfang des Sägeblatts (1) mit geringem Abstand im Schlitz (18) eines Halbringes (17) geführt ist, der zwischen den Seitenplatten (10, 11) der Schutzhaube (15) angeordnet ist.

8. Antriebseinheit nach einem der Ansprüche 1 bis 7, **dadurch gekennzeichnet, dass** an der Schutzhaube (15) ein stationäres Stellmittel (45) angreift.

## Claims

1. Drive unit with a rotating saw blade (1) arranged in a rotatable manner in a protective cover (15) for the connection of a robot, composed of a housing (36, 38, 42) that can be connected to the robot, a shaft (35) being mounted in said housing, via which the saw blade (1) can be driven by interposing a gearbox (30, 31) being mounted in said housing, **characterized in that** the saw blade (1) is held between two inner rings (3, 4), which are arranged on both sides of the saw blade (1) and accommodate it and are firmly connected to one another and to said saw blade (1), and which are accommodated in a rotatable manner in non-rotating outer rings (8, 9) connected to the protective cover, and that the unit composed of the saw blade (1), the inner rings (3,4), coverplates (12, 13), the protective cover and the outer rings (8, 9) is fastened in a detachable manner onto a drive hub (20) driven by the gear box (30, 31).

2. Drive unit according to claim 1, **characterized in that** the inner rings (3, 4) connected to the saw blade (1) are mounted in the outer rings (8, 9) by means of ball bearings (6, 7), which are covered by the cover plates (12, 13).

3. Drive unit according to claim 1 or 2, **characterized in that** said unit (1, 3, 4, 8, 9, 12, 13, 15) can be bolted (21, 22) to the drive hub (20).

4. Drive unit according to any one of claims 1 to 3, **characterized in that** the end of the drive hub (20) is provided with a thread (21), onto which a nut (22) is bolted.

5. Drive unit according to any one of claims 1 to 4, **characterized in that** the unit containing the saw blade (1) is accommodated in a positive manner by pins (26) engaging in openings (25), one of the elements of the pins/openings (25, 26) being provided on the drive hub (20) and the other element on one of the inner rings (3, 4).

6. Drive unit according to any one of claims 1 to 5, **characterized in that** both inner rings (3, 4) arranged opposite one another on both sides of the saw blade (1) are bolted to one another and to the saw blade (1), the bolts (5) extending through corresponding openings (5') in the saw blade (1).

7. Drive unit according to any one of claims 1 to 6, **characterized in that** the outer perimeter of the saw blade (1) is guided with a small clearance in the slot (18) of a half ring (17), which is arranged between the side plates (10, 11) of the protective cover (15).

8. Drive unit according to any one of claims 1 to 7, **characterized in that** a stationary adjustment means (45) acts upon the protective cover (15).

## Revendications

1. Unité d'entraînement comportant une lame de scie (1) rotative, disposée en rotation dans un capot de protection (15), pour raccordement à un robot, formée par un carter (36, 38, 42), pouvant être raccordé au robot, carter dans lequel est logé un arbre (35), sous l'effet duquel la lame de scie (1) peut être entraînée, avec intercalation d'une transmission (30, 31), **caractérisée en ce que** la lame de scie est maintenue entre deux bagues intérieures (3, 4), disposées des deux côtés de la lame de scie (1), et logeant cette dernière, et aussi reliées à demeure l'une à l'autre et à cette lame de scie, bagues qui sont logées avec possibilité de rotation dans des bagues extérieures (8, 9), reliées au capot de protection sans entraînement en rotation, et que l'unité formée par la lame de scie (1), les bagues intérieures (3, 4), des plaques de couverture (12, 13), le capot de protection (15) et les bagues extérieures (8, 9), est fixée d'une manière amovible sur un moyeu d'entraînement (20), entraîné par la transmission (30, 31).

2. Unité d'entraînement selon la revendication 1, **caractérisée en ce que** les bagues intérieures (3, 4) reliées à la lame de scie (1) sont logées dans les bagues extérieures (8, 9) à l'aide de roulements à billes (6, 7), qui sont recouverts par les plaques de couverture (12, 13).

3. Unité d'entraînement selon la revendication 1 ou 2, **caractérisée en ce que** l'unité mentionnée (1, 3, 4, 8, 9, 12, 13) peut être vissée (21, 22) au moyeu d'entraînement (20).

4. Unité d'entraînement selon l'une des revendications 1 à 3, **caractérisée en ce que** l'extrémité du moyeu d'entraînement (20) est pourvue d'un filetage (21) sur lequel est vissé un écrou (22).

5. Unité d'entraînement selon l'une des revendications 1 à 4, **caractérisée en ce que** l'unité contenant la scie (1) est logée, par liaison avec correspondance de forme, en un point opposé au moyeu d'entraînement (20), grâce à l'engrènement de goupilles (26) dans des ouvertures (25), l'un des éléments cheville/ouverture (25, 26) étant prévu contre le moyeu d'entraînement (20) et l'autre contre l'une des bagues intérieures (3, 4).

6. Unité d'entraînement selon l'une des revendications 1 à 5, **caractérisée en ce que** les deux bagues intérieures (3, 4), disposées opposées l'une à l'autre des deux côtés de la lame de scie (1), sont vissées (5) l'une à l'autre et à la lame de scie (1), les vis (5) s'étendant à travers des ouvertures correspondantes (5') aménagées dans la lame de scie (1).

7. Unité d'entraînement selon l'une des revendications 1 à 6, **caractérisée en ce que** la périphérie extérieure de la lame de scie (1) est, avec un faible écartement, guidée dans la fente (8) d'une demi-bague (17), qui est disposée entre les plaques latérales (10, 11) du capot de protection (15).

8. Unité d'entraînement selon l'une des revendications 1 à 7, **caractérisée en ce qu'**un organe de réglage (45), stationnaire, agit sur le capot de protection (15).
